# EUROPÄISCHE PATENTANMELDUNG

(11) **EP 0 617 522 A2**
(43) Veröffentlichungstag der Anmeldung: **28.09.1994**
(21) Anmeldenummer: 94103069.4
(22) Anmeldetag: 01.03.1994
(51) Int. Cl.: H04B 7/26, H04Q 7/04

(54) **Kommunikationssystem zum Anschluss an eine Basisstation eines mehrzellularen, drahtlosen Fernsprechsystems**

(30) Priorität: 26.03.1993 DE 4309848
(71) Anmelder: SIEMENS AKTIENGESELLSCHAFT, D-80333 München (DE)
(72) Erfinder: Bacher, Thomas, Dipl.-Ing., D-81476 München (DE); Heineck, Frank, Dipl.-Ing., D-81377 München (DE); Klug, Karl, Dipl.-Ing., D-83714 Miesbach (DE)

(57) **Zusammenfassung**

Die die drahtlose Übermittlung an Kommunikationsendgeräte (KE) bewirkenden Funkmittel (BM, FM) sind in einer Basisstation (BS) und die die Vermittlung der drahtlos an die Basisstationen (BS) angeschlossenen Kommunikationsendgeräte (KE) bewirkenden Vermittlungsmittel (ELIC) sind im Kommunikationssystem (KS) angeordnet. Zusätzlich sind im Kommunikationssystem bzw. in den Basisstationen (BS) Übertragungsmittel (OCTAT, DSAC) vorgesehen, die über die digitalisierte Sprach- und Signalisierungsinformationen nach dem ZeitgetrenntlageÜbertragungsverfahren übermittelnde Verbindungsleitungen (VL) verbunden sind. Im Sinne einer Reduzierung der Anzahl der Verbindungsleitungen (VL) für eine Basisstation (BS) sind im Kommunikationssystem (KS) die digitalisierten Sprachsignale komprimierende bzw. dekomprimierende sowie echounterdrückende Komprimierungsmittel (ADPCM) vorgesehen. Durch die Aufteilung der Vermittlungsmittel (ELIC), der Funkmittel (BM, FM) und der Übertragungsmittel (OCTAT, DSAC) sowie durch den Einsatz von Komprimierungsmitteln (DPCM) ist unter Berücksichtigung einer erheblichen Integration dieser Komponenten in integrierte Schaltkreise eine besonders wirtschaftliche, programmtechnische und schaltungstechnische Anbindung von mehrzellularen, drahtlosen Fernsprechsystemen an ein Kommunikationssystem realisierbar.

## Beschreibung

Aus der EP 0 226 610 ist bekannt, Basissysteme von drahtlosen Fernmeldesystemen an ein Kommunikationssystem, insbesondere eine Nebenstellenanlage, anzuschließen. Das Basissystem weist einen vermittlungstechnischen und gegebenenfalls einen funktechnischen Teil auf. Der vermittlungstechnische Teil ist einerseits mit dem Kommunikationssystem und andererseits über Verteileinrichtungen mit den funktechnischen Teilen verbunden, die entweder im Basissystem integriert sind oder abgesetzte, d.h. räumlich getrennte, Funkstationen bilden. Das Basissystem ist über mehrere Verbindungsleitungen an das Kommunikationssystem angeschlossen. Hierbei ist für jedes drahtlos, d.h. über eine Funkverbindung an das Basissystem, angeschlossene Kommunikationsendgerät - in der Fachwelt als Cordless Telephone bekannt - ein separater Anschluß zwischen dem Kommunikationssystem und dem drahtlosen Fernsprechsystem vorgesehen. Des weiteren sind die abgesetzten Funkstationen über weitere Verbindungsleitungen an das Basissystem herangeführt. Dies bedeutet einen erheblichen schaltungstechnischen Aufwand für unterschiedliche Übertragungsverfahren und unterschiedliche Übertragungsgeschwindigkeiten sowie einen Mehraufwand für zusätzliche Verbindungsleitungen, verbunden mit zusätzlichem Installations- bzw. Anschlußaufwand - beispielsweise Steck- und Verteileinrichtungen.

Die der Erfindung zugrundeliegende Aufgabe besteht darin, drahtlose Fernsprechsysteme mit geringstem Aufwand an ein Kommunikationssystem anzubinden. Die Aufgabe wird durch die Merkmale des Anspruchs 1 gelöst.

Der wesentliche Aspekt des erfindungsgemäßen Kommunikationssystems ist darin zu sehen, daß die für die Vermittlung der drahtlos angeschlossenen Komunikationsendgeräte bzw. Fernsprechendgeräte erforderlichen Vermittlungsmittel in dem Komunikationssystem und die für die drahtlose Übermittlung der Sprach- und Signalisierungsinformationen vorgesehenen Funkmittel in einer Basisstation realisiert sind. Im Kommunikationssystem bzw. in den Basisstationen sind mit den Vermittlungsmitteln bzw. Funkmitteln verbundene Übertragungsmittel vorgesehen. Die Kopplung des Kommunikationssystems und der Basisstationen bzw. der Übertragungsmittel wird über die Sprach- und Signalisierungsinformationen nach dem Zeitgetrenntlage-Übertragungsverfahren übermittelnde Verbindungsleitungen erreicht, wobei für jedes drahtlos angeschlossene Kommunikationsendgerät ein Übertragungskanal vorgesehen ist. Der wesentliche Vorteil dieser Konzeption ist darin zu sehen, daß zum einen durch die Integration des vermittlungstechnischen Teils und der damit zumindest teilweisen Mitbenutzung der vorhandenen Mittel zum Betreiben bzw. Verwalten des Kommunikationssystems der Aufwand für die Realisierung der Vermittlungsmittel vermindert wird und zum anderen durch den direkten, mehrkanaligen Anschluß der Basisstationen an übertragungstechnisch einfach zu realisierende Teilnehmeranschlüsse des Kommunikationssystems der Aufwand für die Anbindung -insbesondere hinsichtlich Schaltungstechnik, Verbindungsleitungen und Installations- bzw. Steckmittel - erheblich reduziert wird.

Besonders vorteilhaft sind die die Vermittlung der drahtlos angeschlossenen Kommunikationsendgeräte bewirkende Vermittlungsmittel und die Übertragungsmittel in einem Basisstationsanschlußmodul des Kommunikationssystems realisiert und derart ausgestaltet, daß dieses an die vorhandene Teilnehmeranschlußmodul-Schnittstelle anschließbar ist - Anspruch 2. Durch diese Maßnahme wird eine Integration der Vermittlungsmittel in das Kommunikationssystem mit geringstem Aufwand erreicht, da die konstruktive Integration eines wie andere Teilnehmeranschlußmodule - z.B. für analoge und digitale Teilnehmer - ausgestalteten Basisstationsanschlußmoduls an eine vorhandene Schnittstelle ohne zusätzlichen konstruktiven Aufwand möglich ist. Die im Kommunikationssystem implementierten Programme - insbesondere das Vermittlungs- und das Programm zum Administrieren des Kommunikationssystems - sind mit geringfügigen Modifikationen weiter verwendbar. Die Übertragungsmittel des Basisstationsanschlußmoduls sind vorteilhaft durch eine Übertragungseinheit und die Vermittlungsmittel durch eine Peripheriesteuerung gebildet - Anspruch 3. Die Peripheriesteuerung weist kommunikationssystemseitig eine kommunikationssysteminterne, PCM-orientierte Teilnehmeranschlußmodul-Busschnittstelle - beispielsweise eine PCM-Multiplexschnittstelle mit 2 MBit/s - auf. Die Peripheriesteuerung ist mit der Übertragungseinheit über eine ISDN-orientierte Systembusschnittstelle, die beispielsweise mehrere Nachrichtenkanäle und einen Signalisierungskanal aufweist, verbunden. Die Ankopplung der Basisstationen an die Übertragungseinheit erfolgt über eine nach dem Zeitgetrenntlage-Übertragungsverfahren wirkende Übertragungsschnittstelle. Diese Übertragungsschnittstelle stellt eine besonders wirtschaftlich zu realisierende Schnittstelle für den Anschluß von digitalen, ISDN-orientierten Kommunikationsendgeräten an Nebenstellenanlagen dar. Die ISDN-orientierte Übertragungsschnittstelle weist üblicherweise zwei Nachrichtenkanäle, d.h. B-Kanäle - und einen Signalisierungskanal - d.h. D-Kanal - auf.

Besonders vorteilhaft ist die Übertragungseinheit gemäß einer in der deutschen Patentanmeldung P 41 41 493.4 vorgeschlagenen Nachrichtenvermittlungseinheit realisiert - Anspruch 9. Durch diese Realisierung wird eine besonders vorteilhafte Steuerung der von den Kommunikationsendgeräten übermittelten Signalisierungsinformationen bewirkt, wodurch der Realisierungsaufwand für eine Schnittstelleneinheit zusätzlich reduziert wird.

Gemäß einer weiteren vorteilhaften Ausgestaltung des erfindungsgemäßen Kommunikationssystems ist das Basisstationsanschlußmodul mit einer die digitalisierten Sprachinformationen komprimierenden bzw. dekomprimierenden Komprimiereinheit ausgestattet - Anspruch 4. Besonders vorteilhaft wird dies mit einer nach dem Delta-Modulationsverfahren wirkenden Komprimiereinheit bewirkt - Anspruch 5. Eine Komprimiereinheit ist vorteilhaft durch vier integrierte, jeweils für vier bidirektionale Übertragungskanäle die digitalisierten Sprachsignale komprimierende bzw. dekomprimierende und echokompensierende Komprimierungsschaltkreise gebildet, wobei diese jeweils eine PCM-orientierte Busschnittstelle mit einer Übertragungsgeschwindigkeit von 2048 KBit/s aufweisen, die an die Busschnittstelle der Vermittlungseinheit angeschlossen ist - Anspruch 6. Die Komprimierung bzw. Dekomprimierung und die Echokompensation bzw. -unterdrückung - verursacht insbesondere durch die Funktechnik - der digitalisierten Sprachsignale wird vorzugsweise gemäß den CCITT-Empfehlungen G.726, G.721, G.723 realisiert. Durch die Komprimierung der digitalisierten Sprachinformationen von beispielsweise 64 auf 32 bzw. 16 KBit/s Übermittlungsgeschwindigkeit können über eine Verbindungsleitung zwischen dem Kommunikationssystem und den Basisstationen vier bzw. acht Sprachkanäle übertragen werden, wobei durch die in der deutschen Patentanmeldung P 41 41 493.4 vorgeschlagene Behandlung der Signalisierungsinformationen diese weiterhin in einem Kanal übermittelt werden können. Durch diese Maßnahmen wird der Aufwand für die Anbindung der Basisstationen an das Kommunikationssystem zusätzlich erheblich verringert, da sowohl Verbindungsleitungen als auch Schaltungstechnik eingespart werden. Alternativ kann auch die Anzahl der an die Basisstationen schnurlos angeschlossenen Kommunikationsendgeräte bei gleichem Verbindungsleitungsaufwand erheblich gesteigert werden.

In den Basisstationen sind die Übertragungsmittel durch mehrere, jeweils eine nach dem Zeitgetrenntlage-Übertragungsverfahren wirkende und eine ISDN-orientierte, interne Systemschnittstelle aufweisende Leitungsanschlußeinheiten realisiert. Deren ISDN-orientierte Schnittstelle ist jeweils mit einer für eine Funkübertragung die digitalisierten Sprachsignale Burst-orientiert aufbereitende Burst-Einrichtung und deren Prozessorschnittstelle mit einer zentralen Steuerung verbunden. Die Burst-Einrichtung ist an die zentrale Steuerung und an den Funkübertragungsteil angeschlossen - Anspruch 7. Die Leitungsanschlußeinheit ist hierbei ebenfalls durch eine gemäß der deutschen Patentschrift P 41 41 493.4 vorgeschlagenen Nachrichtenvermittlungseinheit realisiert - Anspruch 9. Wie auch im Basisstationsanschlußmodul wird durch diese Maßnahme eine besonders wirtschaftliche Realisierung hinsichtlich programmtechnischem und schaltungstechnischem Aufwand erreicht.

Die Burst-Steuerung und der Funkübertragungsteil sind derart ausgestaltet, daß die Burst-orientierten digitalisierten Sprach- und Signalisierungsinformationen sowie die empfangenen bzw. zu sendenden Funksignale gemäß dem DECT-Standard (Digital European Cordless TElecommunication) des ETSI (European Telecommunications Standard Institute) realisiert sind - Anspruch 8. In diesem DECT-Standard ist das Bilden von Burst-orientierten digitalisierten Sprachsignalen und das Zuordnen zu Sende- bzw. Empfangskanälen sowie das Bilden der Sende- und Empfangsfunksignale standardisiert.

Im folgenden wird das erfindungsgemäße Kommunikationssystem anhand eines Blockschaltbildes näher erläutert.

Das Blockschaltbild zeigt ein Kommunikationssystem KS, an das eine Basisstation BS über drei der acht dargestellten Verbindungsleitungen VL angeschlossen ist. Die verbleibenden fünf Verbindungsleitungen VL sind zu weiteren, nicht dargestellten und durch Punkte angedeuteten Basisstationen BS geführt. Die Verbindungsleitungen VL sind im Kommunikationssystem KS an eine in einem Basisstationsanschlußmodul SLMC angeordnete Übertragungseinheit OCTAT geführt. In der Übertragungseinheit OCTAT ist für jede ankommende Verbindungsleitung VL eine Übertragungsschaltung UP1...UP8 vorgesehen. Durch diese Übertragungsschaltungen UP1...UP8 ist jeweils eine nach dem Zeitgetrenntlage-Übertragungsverfahren wirkende UP-Schnittstelle realisiert. Die Up-Schnittstelle ist für den Anschluß von ISDN-Kommunikationsendgeräten - nicht dargestellt - vorgesehen. Die bidirektionale Informationsübermittlung wird durch Informationsbursts mit einer Übertragungsgeschwindigkeit von 384 KBit/s bewirkt. Die Informationsübermittlung umfaßt zwei Nachrichtenkanäle - die bei ISDN-Verbindungen mit B-Kanäle bezeichnet sind - sowie einen Signalisierungskanal - D-Kanal - und zusätzliche Informationen für die Rahmensynchronisation, für zusätzliche Dienstkanäle und einem weiteren transparenten Kanal - z.B. für eine Paketübermittlung.

Die empfangenen bzw. die zu sendenden Nachrichten- und Signalisierungsinformationen werden mit Hilfe einer Multiplex-Demultiplexeinrichtung M zu einem Informationsstrom von 2084 KBit/s zusammengefaßt und an eine ISDN-orientierte, interne Systembusschnittstelle IOM gesteuert . Diese Systembusschnittstelle IOM ist an eine gleichartig realisierte interne, ISDM-orientierte Systembusschnittstelle IOM einer in dem Basisstationsanschlußmodul SLMC angeordneten Peripheriesteuerung ELIC geschaltet. Die Systembusschnittstelle IOM ist in der Peripheriesteuerung ELIC an einer D-Kanal-Steuerung DA realisiert, mit deren Hilfe die Zuteilung bzw. das Sperren der Signalisierungskanäle in den Verbindungsleitungen VL bewirkt wird. Die Nachrichtenkanäle, d.h. B-Kanäle, werden an eine Vermittlungseinheit EPIC geschaltet. In dieser Vermittlungseinheit EPIC ist ein zeitschlitzgesteuertes Koppelfeld mit 2048 KBit/s-Eingängen implementiert. Mit Hilfe dieses Koppelfeldes sind 32 Verbindungen für ISDM-Kommunikationsendgeräte bzw. 64 Nachrichtenkanäle á 64 KBit/s vermittelbar. Dies bedeutet, daß mit Hilfe dieses Koppelfeldes 64 drahtlos an die Basisstationen BS angeschlossene Kommunikationsendgeräte KE vermittelbar sind. Die Vermittlungseinheit EPIC weist des weiteren drei bidirektionale PCM-orientierte Busschnittstellen PCM1...PCM3 auf, wobei die erste Busschnittstelle PCM1 mit einem Gruppenkoppelfeld GKF eines Leitungsanschlußmoduls LT verbunden ist. Die erste Busschnittstelle PCM1 stellt die Basisstationsanschlußmodul-Busschnittstelle PCM1 dar. Das Leitungsanschlußmodul LT ist Teil einer Leitungsanschlußeinrichtung LTE, die mehrere Basisstationsanschlußmodule SLMC aufnehmen kann. Anstelle dieser Basisstationsanschlußmodule SLMC können beispielsweise Teilneheranschlußmodule - nicht dargestellt - für beispielsweise ISDM-Kommunikationsendgeräte oder analoge Kommunikationsendgeräte eingefügt werden.

Das Leitungsanschlußmodul LT weist zusätzlich zum Gruppenkoppelfeld GKF eine durch ein Mikroprozessorsystem realisierte Leitungsmodulsteuerung LST auf. Das Gruppenkoppelfeld GKF ist über weitere PCM-orientierte Multiplexleitungen ML mit einem nicht dargestellten zentralen Koppelfeld des Kommunikationssystems verbunden. Des weiteren ist die Leitungsmodulsteuerung LST über eine nach dem HDLC-Übertragungsverfahren wirkende Signalisierungsleitung SL mit einem nicht dargestellten zentralen Steuerwerk verbunden. Analog hierzu ist die Leitungsmodulsteuerung LST über einen beispielsweise ersten Eingang E1 mit einer in der Peripheriesteuerung ELIC angeordneten Schnittstellensteuerung SST verbunden. Die Informationsübermittlung wird hierbei ebenfalls gemäß dem HDLC-Übertragungsverfahren durchgeführt. Die Schnittstellensteuerung SST ist des weiteren über Leitungen LE mit der D-Kanal-Steuerung DA und mit einer in der Vermittlungseinheit ELIC angeordneten Signalisierungssteuerung SIS verbunden. Mit Hilfe der D-Kanal-Steuerung SIS werden die in den D-Kanälen enthaltenen bzw. einzufügenden Signalisierungsinformationen - z.B. in Kanal 31 des 64 KBit/s-Kanäle umfassenden gemultiplexten Bitstromes - gelesen bzw. eingefügt und an die Signalisierungssteuerung SIS geleitet bzw. von dieser übernommen. Mit Hilfe der Signalisierungssteuerung SIS werden die Signalisierungsinformationen durch die HDLC-Übertragungsprozedur an den ersten Eingang E1 der Leitungsmodulsteuerung LST übermittelt. Mit Hilfe der Signalisierungskanalsteuerung DA werden die Signalisierungskanäle entsprechend der in der deutschen Patentanmeldung P 41 41 493.4 vorgeschlagenen Steuerung der Signalisierungs- bzw. D-Kanäle gesteuert, d.h. einem temporär zugeteilt und die anderen in dieser Zeit gesperrt.

Die Verbindungen ADL zwischen der zweiten und dritten Busschnittstelle PCM2, PCM3 und den Delta-Modulations- bzw. -Demodulationseinrichtungen ADPCM1, ADPCM2 weisen eine Übertragungsgeschwindigkeit von 2048 KBit/s auf, wobei durch eine Delta-Modulations- bzw. -Demodulationseinrichtung ADPCM1, ADPCM2 jeweils 16 bidirektionale Nachrichtenkanäle bearbeitbar sind. Für das Ausführungsbeispiel sei angenommen, daß durch die Delta-Modulations-/-Demodulationseinrichtung DPCM1, DPCM2 die Übermittlungsgeschwindigkeit eines Nachrichtenkanals von 64 KBit/s auf 32 KBit/s reduziert werden kann. Eine weitere Reduzierung auf beispielsweise 16 KBit/s ist bei noch wesentlich aufwendigeren Delta-Modulations-/-Demodulationseinrichtungen möglich. Durch die ausführungsbeispielgemäße Reduzierung können über die drei Verbindungsleitungen zwischen dem Kommunikationssystem und der Basisstation BS anstelle der sechs Nachrichtenkanäle á 64 KBit/s nunmehr 12 Machrichtenkanäle á 32 KBit/s bidirektional übertragen werden. Dies bedeutet, daß an die Basisstation BS 12 Kommunikationsendgeräte KE drahtlos - d.h. durch eine Funkübertragung - angeschlossen werden können.

Die drei Verbindungsleitungen VL werden in der Basisstation BS jeweils an eine Leitungsanschlußeinheit DSAC1...3 geführt. Jede dieser Leitungsanschlußeinheiten DSAC1 weist eine gemäß der Übertragungsschaltung UP1...UP8 realisierte Übertragungsschaltung UP auf, durch die eine Übertragung gemäß dem Zeitgetrenntlage-Übertragungsverfahren realisiert ist. Die Übertragungsschaltung UP ist mit einer eine ISDM-orientierte, interne Systemschnittstelle IOM realisierende ISDM-Schnittstellenschaltung ISM verbunden. Diese ISDM-orientierte, interne Systemschnittstelle IOM weist im Gegensatz zu der Systembusschnittstelle IOM im Basisstationsanschlußmodul SLMC lediglich zwei Nachrichten- bzw. B-Kanäle und einen Signalisierungskanal sowie weitere systeminterne Informationskanäle auf. Das ISDM-Schnittstellenmodul ISM ist des weiteren mit einer Signalisierungssteuerung SIS verbunden. Mit Hilfe dieser Signalisierungssteuerung SIS werden die Signalisierungsinformationen der Signalisierungskanäle bzw. D-Kanäle gemäß dem HDLC-Übertragungsverfahren empfangen bzw. gesendet und für eine Übermittlung über eine Prozessorschnittstelle PST und einen lokalen Bus LB an eine Steuerung BST aufbereitet, d.h. für eine Übermittlung über Daten- , Adreß- und Steuerleitung des lokalen Bus LB angepaßt. Dieser lokale Bus LB ist des weiteren mit einem Lesespeicher ROM und einem Schreib-Lesespeicher RAM verbunden. Hierbei sind im Schreib-Lesespeicher RAM im wesentlichen die nicht resistenten Informationen und im Lesespeicher ROM die die Basisstation BS überwachenden und koordinierenden Programme gespeichert.

Die ISDM-orientierten, internen Systemschnittstellen IOME der Leitungsanschlußeinheiten DSAC1...3 werden an ein Burstmodul BM geführt. Im Sinne einer Koordinierung und Überwachung durch die Steuerung BST ist dieses Burstmodul BM an den lokalen Bus LB angeschlossen. Durch dieses Burstmodul BM werden die empfangenen bzw. die zu sendenden Nachrichten- und Signalisierungsinformationen gemäß dem DECT-Standard für drahtlose Telefone in entsprechende Übertragungsrahmen eingefügt und hinsichtlich ihrer physikalischen Eigenschaften derart aufbereitet, daß sie an ein Funkmodul FM übertragbar sind. Mit Hilfe des Funkmoduls FM werden die Nachrichten- und Signalisierungsinformationen gemäß ebenfalls dem DECT-Standard mit einer Funkfrequenz von 1800 MHz übertragen. Gemäß dem DECT-Standard können 12 bidirektional gerichtete 64 KBit/s-Nachrichtenkanäle einschließlich der zugehörigen Signalisierungsinformation drahtlos übermittelt werden. Dies bedeutet, daß an diese Basisstation BS 12 Kommunikationsendgeräte KE, d.h. 12 Funktelefone, drahtlos angeschlossen werden können.

Besonders vorteilhaft werden die Vermittlungseinheit ELIC, die Übertragungseinheit OCTAT, die Leitungsanschlußeinheit DSAC sowie auch die Delta-Modulations- bzw. -Demodulationseinrichtung DPM jeweils durch kundenspezifierbare integrierte Schaltkreise realisiert und somit der schaltungstechnische Aufwand verringert.

Die vorliegend beschriebene Konzeption einer Anbindung von Basisstationen BS an ein Kommunikationssystem KS, insbesondere ein großes Kommunikationssystem KS, stellt hinsichtlich Entwicklungs- und Realisierungsaufwand unter Berücksichtigung einer Mitbenutzung vorhandener programmtechnischer, konstruktiver und schaltungstechnischer Komponenten des Kommunikationssystems und weitgehender schaltungstechnischer Integration der einzelnen Komponenten in integrierte Schaltkreis eire besonders wirtschaftliche Lösung dar, die durch den Einsatz von Delta-Modulations-/-Demodulationsverfahren für PCM-orientierte Signale im Kommunikationssystem KS verbessert wird.

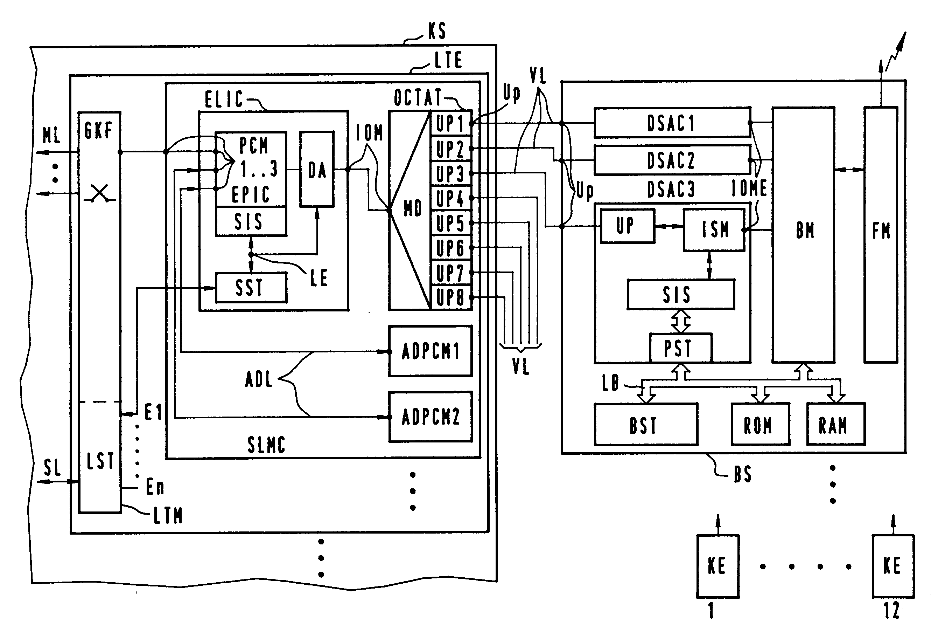

## Patentansprüche

1. Kommunikationssystem zum Anschluß von Kommunikationsendgeräten (KE) von drahtlosen Fernsprechsystemen, - bei dem die drahtlose Übermittlung an die Kommunikationsendgeräte (KE) bewirkende Funkmittel (BM, FM) in einer Basisstation (BS) und
- bei dem die Vermittlung der drahtlos an die Basisstationen (BS) angeschlossene Kommunikationsendgeräte (KE) bewirkenden Vermittlungsmittel (ELIC) im Kommunikationssystem (KS) angeordnet sind,
- bei dem im Kommunikationssystem (KS) bzw. in den Basisstationen (BS) mit den Vermittlungsmitteln (ELIC) bzw. Funkmitteln (BM, FM) verbundene, das Zeitgetrenntlage-Übertragungsverfahren realisierende Übertragungsmittel (OCTAT, DSAC) vorgesehen sind, die jeweils über digitalisierte Sprach- und Signalisierungsinformationen nach dem Zeitgetrenntlage-Übertragungsverfahren übermittelnde Verbindungsleitungen (VL) verbunden sind, wobei für jedes drahtlos angeschlossene Kommunikationsendgerät (KE) ein Übertragungskanal vorgesehen ist.

2. Kommunikationssystem nach Anspruch 1,
**dadurch gekennzeichnet,**
daß die Vermittlungsmittel (ELIC) sowie zugeordnete Übertragungsmittel (OCTAT) in einem Basisstationsanschlußmodul (SLMC) des Kommunikationssystems (KS) realisiert und derart ausgestaltet sind, daß dieses an eine vorhandene Teilneheranschlußmodul-Schnittstelle (ML, SL) anschließbar ist - Anspruch 2.

3. Kommunikationssystem nach Anspruch 2,
**dadurch gekennzeichnet,**
daß die Übertragungsmittel (OCTAT) im Basisstationsanschlußmodul (SLMC) durch
- eine mehrere nach dem Zeitgetrenntlage-Übertragungsverfahren wirkende Übertragungsschnittstellen (Up) und eine interne, ISDN-orientierte Systembusschnittstelle (IOM) aufweisende Übertragungseinheit (OCTAT) und
- die Vermittlungsmittel (ELIC) durch eine eine interne, ISDN-orientierte Systembusschnittstelle (IOM) und PCM-orientierte Teilnehmeranschlußmodul-Busschnittstellen (PCM) aufweisende Peripheriesteuerung (ELIC) gebildet ist, wobei die internen, ISDN-orientierten Systembusschnittstellen (IOM) der Übertragungseinheit (OCTAT) und der Peripheriesteuerung (ELIC) verbunden sind.

4. Kommunikationssystem nach einem der Ansprüche 1 bis 3,
**dadurch gekennzeichnet,**
daß im Basisstationsanschlußmodul (SLMC) die digitalisierten Sprachsignale komprimierende bzw. dekomprimierende Komprimiermittel (ADPCM1,2) vorgesehen sind, wobei die Komprimiermittel (ADPCM1,2) im Sinne einer Übermittlung der komprimierten bzw. dekomprimierten, digitalisierten Sprachinformationen über eine PCM-orientierte Busschnittstelle (PCM) mit einer Busschnittstelle (PCM) der Peripheriesteuerung (ELIC) verbunden sind.

5. Kommunikationssystem nach Anspruch 4,
**dadurch gekennzeichnet,**
daß die Komprimiermittel (ADPCM1,2) durch nach dem Delta-Modulationsverfahren für PCM-orientierte, digitalisierte Sprachinformationen wirkende Komprimiereinheiten (ADPCM1,2) realisiert sind.

6. Kommunikationssystem nach Anspruch 4 oder 5,
**dadurch gekennzeichnet,**
daß eine Komprimiereinheit (ADPCM) durch vier integrierte, jeweils für vier bidirektionale Übertragungskanäle die digitalisierten Sprachsignale komprimierende bzw. dekomprimierende und echokompensierende bzw. echounterdrückende Komprimierungsschaltkreise gebildet ist, wobei diese jeweils eine PCM-orientierte Busschnittstelle (PCM) mit einer Übertragungsgeschwindigkeit von 2048 KBit/s aufweisen, die an die Busschnittstelle (PCM2,3) der Vermittlungseinheit (ELIC) geschaltet ist.

7. Kommunikationssystem nach einem der vorhergehenden Ansprüche,
**dadurch gekennzeichnet,**
daß in den Basisstationen (BS) die Übertragungsmittel (DSAC) durch mehrere jeweils eine nach dem Zeitgetrenntlage-Übertragungsverfahren wirkende Übertragungsschnittstelle (Up) sowie eine ISDN-orientierte, interne Systemschnittstelle (IOME) aufweisende Leitungsanschlußeinheiten (DSAC) realisiert sind, daß die ISDN-orientierte interne Systemschnittstelle (IOME) mit einer für eine Funkübertragung die digitalisierten Sprachsignale in Burst-orientierte Sendesignale aufbereitende Burst-Einrichtung (BM) und eine Prozessorschnittstelle (PST) jeder Leitungsanschlußeinheit (DSAC) mit einer zentralen Steuerung (BST) verbunden ist, und daß die Burst-Einrichtung (BM) an die zentrale Steuerung (BST) und an ein Funkübertragungsmittel (FM) angeschlossen ist.

8. Kommunikationssystem nach Anspruch 7,
**dadurch gekennzeichnet,**
daß die Burst-Steuerung (BM) und ein das Funkmittel (FM) repräsentierender Funkübertragungsteil (FM) derart ausgestaltet ist, daß die Burst-orientierten Sende- und Empfangssignale sowie die empfangenen bzw. zu sendenden Funksignale gemäß dem DECT-Standard gebildet sind.

9. Kommunikationssystem nach einem der vorhergehenden Ansprüche,
**dadurch gekennzeichnet,**
daß die Übertragungseinheit (OCTAT) des Basisstationsanschlußmoduls (SLMC) sowie die Leitungsanschlußeinheiten (DSAC) der Basisstationen (BS) gemäß einer in der deutschen Patentanmeldung P4141493 .4 vorgeschlagenen Nachrichtenvermittlungseinheit realisiert sind.
